# EUROPEAN PATENT APPLICATION

(11) **EP 4 682 717 A1**
(43) Date of publication of application: **21.01.2026**
(21) Application number: 24188537.5
(22) Date of filing: 15.07.2024
(51) Int. Cl.: G06F 9/48, G06F 9/52, G06F 9/50

(54) **DYNAMIC CONCURRENT OBJECT-BASED PROGRAMMING MODEL**

(71) Applicant: Imec VZW, 3001 Leuven (BE)
(72) Inventor: VERACHTERT, Wilfried, 3140 Keerbergen (BE); HERZEEL, Charlotte, 3000 Leuven (BE); GURDEEP SINGH, Robbert, 3370 Boutersem (BE); WUYTS, Roel, 3190 Boortmeerbeek (BE)
(74) Representative: Winger

(57) **Abstract**

A method (300) of executing a concurrent task-oriented computer program and related distributed computing system (100) for program execution are disclosed. Multiple compute nodes (110a-d) of the computing system are coupled to a shared global computer memory (120). The method comprises decomposing the task-oriented computer program into a plurality of tasks at runtime and adding dependencies (307) to created tasks to constrain an execution order thereof. Tasks with resolved start dependencies are distributed (313) across the different compute nodes and then executed (303) on the different compute nodes. Tasks that have finished execution and no child tasks outstanding are terminated. Task outputs are stored (316) as immutable objects in the shared global memory. Tasks are created dynamically in a parent-child relationship and according to a tree structure while executing.

## Description

### Field of the invention

The present invention relates to the field of dynamic object-based programming models for parallel and distributed computer architectures supporting concurrent computing applications such high-performance computing (HPC).

### Background of the invention

Today's high-performance computer clusters or grid systems consist of many networked servers, in which each server constitutes an independent computer system with its own associated memory space. Applications benefiting from all the available compute resources therefore should run in a distributed fashion across the networked servers, for example using the message passing interface (MPI) library for communication, and in parallel within the individual servers, for example using multithreading in the context of multiple CPU cores, CUDA in the presence of GPU accelerators, etc.

Parallel and concurrent programming languages have been developed with the goal of optimizing the execution of user application on such parallel and distributed computer infrastructures and provide languages constructs for describing independent pieces of code, i.e. pieces of code that can be executed separately from each other. The independent code pieces are then allowed to run in parallel through multiple threads, processes, or tasks. The different parallel and concurrent programming languages or libraries each implement a particular programming model: an execution model which defines the constraints on the order and/or location of execution, as well as the means of communication and/or synchronization between these independent pieces of code when executed by the runtime environment of the computer infrastructure. As such, the programming model makes assumptions about the underlying computer hardware architecture whereon the parallel or concurrent programs will be executed, i.e. is tailored to optimize computational efficiency for concurrent programs running on this type of computer hardware architecture. It is therefore important that the programming model and the computer hardware architecture match, otherwise the performance will be poor.

For example, multi-threaded programming implicitly assumes a hardware-threaded architecture and shared memory. Running multi-threaded programs in a distributed fashion across a network, on the contrary, will require substantially more efforts from the runtime system and most likely result in suboptimal performance. Similarly, locks are frequently used to control memory access in shared-memory hardware systems, but significantly degrade performance in a distributed memory system.

Moreover, the workload emerging from a user application should be dealt with efficiently by the concurrent programming model, which means that the computational work needs to be distributed as uniformly as possible across the available compute resources to avoid any load imbalances. Existing programming models like the actor or the MPI programming model allow for some flexibility in the workload distribution, by letting the application developer manage locality - the idea of keeping the physical location of data close to the components that perform computations on that data or consume the data - completely and explicitly. In these models, multiple processes execute user code in parallel on different input data and data for computation can be exchanged between the different processes when necessary. This flexibility comes at the expense of a large communication and synchronization overhead between the processes, which lacks scalability if a very fine-grained parallelism or work division is sought or required at runtime, e.g. when accurately simulating chaotic or highly nonlinear systems. It becomes tremendously complex to manage thousands of independent processes and their dependencies, track the locations where specific code segments are executed, etc.

Additionally, workload balancing proves to be difficult to achieve for applications that have irregular compute patterns, not all of which can be predicted at design time but are only known at runtime.

It is therefore desirable to provide concurrent programming models and related computing methods that yield an efficient utilization of all the available compute resources in a large-scale distributed computing system, regardless of the precise scale of that system, e.g. regardless of the number of compute nodes, processors or cores composing the system. It is also desirable to provide concurrent and parallel programming models and related computing methods that achieve good and flexible workload distribution across the compute elements of the large-scale distributed computing system, especially for dynamic, irregular applications where the data sizes or the number of tasks are not known beforehand, but only at runtime, and which do not abide by static distribution schemes. Moreover, it is desirable to provide concurrent programming models and related computing methods that are easy to use, alleviating the programmer's burden of managing locality completely and explicitly and/or managing locks, synchronization primitives, and the like.

### Summary of the invention

It is an object of embodiments of the present invention to overcome the above-mentioned disadvantages.

In one aspect, the present invention relates to a method for improving computational resource utilization in a large-scale distributed computing system when executing concurrent task-oriented computer programs on that system. The distributed computing system comprises a plurality of compute nodes that are coupled to a shared global computer memory as the physical main memory of the computing system. The method comprises decomposing the task-oriented computer program into a plurality of tasks at runtime, by dynamically creating tasks on the plurality of compute nodes. The method thus allows the execution of tasks that create new tasks. While executing on one of the compute nodes, a task can create one or multiple other tasks in a parent-child relationship. This creation of other tasks by a parent task is a non-blocking operation. The program decomposition and dynamic task creation establishes a tree structure, referred to as task tree. The method allows constraining the execution order of the created tasks by adding dependencies to the created tasks. This includes the addition of stop dependencies to parent tasks of the task tree upon creation of their respective child tasks and the addition of start dependencies to sibling tasks of the task tree that are subject to the prior execution of at least one other sibling task. Created tasks that have all the start dependencies resolved are distributed across the different compute nodes and the distributed tasks are then executed locally on execution units of the respective compute node. The distribution of tasks may comprise migrating a task from a creator node (compute node whereon the task was originally created) to another compute node, but not every created task has to be migrated to another compute node. Created tasks that have finished execution on the execution units of the different compute nodes and no stop dependencies outstanding are terminated and task outputs are stored as immutable objects in the shared global computer memory when the respective task has finished executing. Task inputs are retrieved from immutable objects stored in the shared global computer memory by reference to a unique object identifier associated with the object.

In embodiments of the invention, the step of distributing the tasks may comprise scheduling the tasks that have all the start dependencies resolved for execution on respective target nodes of the different compute nodes and migrating the scheduled tasks to the respective target nodes. The target nodes may be determined according to a task scheduling strategy, such as a work stealing strategy.

In embodiments of the invention, the compute nodes may comprise one or multiple compute cores that are configured to operate on data contained in memory objects which are temporarily held in the shared global memory. The memory objects are generated dynamically as the computer program unfolds during runtime, because each one of the dynamically created tasks declares its associated input and output objects. In embodiments of the invention, the declaration of new output objects, not yet existent in the shared global computer memory, precedes the execution of the declaring task and results in the creation of a new object identifier (OID) as an object reference, which is then passed to the task as one of its arguments. The compute cores are configured to load and store data through the corresponding memory objects and each compute core addresses the data in the shared global memory by reference to the data-containing memory object and the data location within the data-containing memory object. Each memory object is subdivided into a plurality of fragments that are distributed across the shared global memory and task-related data (e.g. task inputs and outputs) is stored in one or more fragments of the respective task input and task output objects. The logical memory space associated with each memory object is linearly addressable and each fragment of the memory object has a corresponding logical address in the logical memory space. The data location within the memory object may be specified by an offset in the corresponding logical memory space, e.g. as the number of fragments to be skipped starting from the first fragment in the memory object. Different memory objects are distinguishable by the unique object identifier that is assigned to each memory object. The fragment of each memory object also has a physical address in the physical memory space associated with the shared global memory. Compute nodes therefor preferably comprise an object management unit that is configured to calculate, rather than looking up in a table or translating, the physical address of a data item requested by one of the compute cores based on the offset of the data-holding fragment in the corresponding memory object and the object identifier of the corresponding memory object.

In embodiments of the invention, each dynamically created task of the program decomposition may be encapsulated into and represented by a task object which contains an identifier of the task (task object identifier) and a reference to or copy of the task's code block and associated code arguments (e.g. input and output data objects). Task objects are preferably stored locally on the compute node on which the task was originally created, because the tasks and related task objects are generally too short-lived to place them into the shared global memory. This further reduces network traffic and lowers the risk of memory bandwidth saturation. Nonetheless, task objects may be stored in the shared global memory in alternative embodiments of the invention, e.g. if sufficiently long-lived. Task distribution resulting in the transfer of a task between a pair of compute nodes may be accompanied by a transfer and/or copy of the underlying task object.

In embodiments of the invention, the migration of a task includes the transmission over an inter-compute node network of the task code block from one node - the victim node - to another node - the thief node - but advantageously excludes the transmission of any task-related dependency data. The task code block may travel from a message channel of a worker process instantiated on the victim node to the message channel of another worker process instantiated on the thief node. Keeping the pending task object within the victim node reduces the communication overhead. Furthermore, task code blocks are preferably executed in an uninterrupted manner by executor submodules of worker process instantiated on the different compute nodes, thus not relying on any call stack (recording the tasks execution process and reentry points) for task resumption at a later time. Programs are assumed to not block on the return value of a task. Rather explicit continuation tasks are created to handle the results of tasks. This facilitates the migration of task code during task distribution as no call stack needs to be transmitted between the worker process/nodes. Task code arguments, e.g. input data, input variables or constants are held by memory (data) objects that are globally accessible in the shared computer memory and therefore do not have to be moved from the victim node to the thief node when the task is migrated- transmitting a reference (e.g. object identifier, possibly in combination with an offset) to these input arguments together with the corresponding code block is sufficient. This further facilitates the migration of task code during task distribution and reduces the data traffic across the network that interconnects the different compute nodes.

It is an advantage of embodiments of the invention that tasks can be transferred to any other compute node that differs from the compute node on which the task was initially created. Transferred or non-transferred task can be executed locally on respective ones of the plurality of compute nodes and yet, still have access to non-local and/or global input data (task input arguments)present in the shared and globally accessible computer memory, by referencing this input data indirectly through the corresponding object identifier (OID). In addition, each task may be assigned a smaller portion of private memory, e.g. task-private memory for local variable storage and intermediate results, which is local (to the compute node on which the task executes) and not shared with the other tasks. The task-private memory may also hold references to spawned child tasks (e.g., a task object identifier - TOID, or equivalent reference), thereby allowing user code to use these references, e.g., when setting start dependencies of another task.

It is a further advantage of embodiments of the invention that child tasks do not run in the context of their parent task and that their private memory spaces are isolated from each other. Data can still be communicated between child tasks and parent tasks by means of references (e.g., the unique object identifiers) to the data-containing memory objects in the shared global memory, which can be shared and passed between tasks. Therefore, tasks can be moved easily across the compute nodes of the computing system, and there is no need for distributed memory coherency across the computing system and across the tasks.

It is yet another advantage of embodiments of the invention that code within a task is lock-free since reads are performed with respect to immutable memory objects and the currently executing task is the only task that has the necessary access rights to modify the task output objects, which become read-only when that task has finished. Moreover, hardware memory coherency at the level of memory objects within the shared global memory is not needed since each memory object is only written to a single time by a single task before becoming read-only.

It is an advantage of embodiments of the invention that the programmer is not burdened with the challenge of controlling the placement of data and/or task code; only the task dependency information and task input/output objects are specified by the programmer. It is then the runtime system and hardware that exploits the provided information when deciding where to place and schedule tasks within the distributed computing system.

It is a further advantage of embodiments of the invention that a full task tree can be created dynamically at runtime when such full task tree is not available or impossible to obtain at design time or compile time. This facilitates expressing applications with irregular compute and/or data structure requirements that become apparent during the execution of the program. However, this does not preclude carrying out design time analysis in some embodiments of the invention, in which parts of the task tree can be built statically and optimized at design time, e.g. through code analysis.

It is advantageous that the dynamic decomposition of the task-oriented computer program by iterated child task spawning processes at runtime abides to a tree structure, which is a rooted directed acyclic graph. The tree structure is free of cycles, which means that there is always at least one task ready for execution that can be progressed, hence a deadlock or live lock is impossible.

In another aspect, the present invention relates to a distributed computer or computing system that is adapted to carry out the method steps of embodiments of the previous aspect. The distributed computer or computing system comprises a plurality of compute nodes that are coupled to a shared global computer memory.

The invention also relates to a computer program that comprises instructions which, when the program is executed on a distributed computer or computing system comprising a plurality of compute nodes coupled to a shared global computer memory, cause the distributed computer or computing system to carry out the method steps of embodiment of the previous aspect. The computer program may be provided in the form of a software package or runtime library, software that is part of the runtime engine or runtime environment, software that is supported by dedicated runtime management hardware units, middleware, or firmware.

In embodiments of the invention, the shared global memory may be a distributed or disaggregated computer memory. Furthermore, the shared global memory may comprise a plurality of physically distinct and separated memory devices or storage nodes.

It is an advantage of embodiments of the invention that the execution method for concurrent task-based computer programs is conceived to perform and scale well in parallel computing architectures such as supercomputers that comprise a very large number of interconnected compute nodes. It is a further advantage of embodiments of the invention that irregular and dynamically varying workloads can be balanced efficiently through a task distribution mechanism like task stealing. Furthermore, communication overhead with respect to task scheduling and task distribution can be advantageously reduced, thereby minimizing the amount of control messages that needs to be exchanged between the independent compute nodes.

It is a further advantage of embodiments of the invention that dynamic workload balancing can be obtained for a variety of applications without requiring users to perform dynamic profiling of their application during runtime and identify hotspot so as to be able to fine-tune their application code to match and perform well with the underlying hardware architecture.

Yet another advantage of embodiments of the invention resides in the overall reduction of the communication overhead related to task distribution and task dependency management. Moreover, there is no restriction as to where a task may be located during execution, which significantly simplifies the programming task for the user.

It is yet another advantage of embodiments of the invention that the dynamical task distribution and scheduling does not require synchronization constructs like barriers or locks, is free of deadlocks and rules out race conditions.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 shows a distributed computing system adapted to carry out concurrent execution methods for task-oriented computer programs, in accordance with an embodiment of the invention.
FIG. 2 illustrates the instantiation of worker nodes of a distributed work scheduler as part of the runtime system for task-oriented computer programs executing on the distributed computing system, in accordance with an embodiment of the invention.
FIG. 3 is a flow diagram illustrating various steps of a concurrent execution method for task-oriented computer programs, in accordance with an embodiment of the invention.
FIG. 4 illustrates the dynamic decomposition of a user program into smaller tasks at runtime, in accordance with embodiments of the invention.

The drawings are only schematic and are non-limiting. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the context of the present invention, a computer program is a sequence of statements that are expressed in or can be translated into a machine language for the purpose of execution. A task-based or task-oriented computer program means that statements of the program can be grouped into units of computational work that are concurrent and can be executed independently from each other, i.e. can be executed in parallel. Here, concurrency means that a program can be subdivided into multiple tasks and these tasks can be reordered and executed independently, either on the same execution unit or on different execution units, at the same time (i.e. task-parallelism) or at different moments in time. The programming model or execution model may provide or support language constructs which implement the grouping of program statements into units of work.

In the context of the present invention, a task refers to a unit of computational work that needs to be mapped to an execution hardware. The unit of computational work may correspond to one or more statements of a user program code, e.g. in the form of a subroutine, which can be compiled into a set of machine-readable instructions available at runtime and subsequently mapped to execution hardware units (e.g. one or more hardware threads) of one of the executor submodules of the distributed task scheduler. Units of computational work do not have to be fixed in size. Each task can be represented in a software implementation through a corresponding task object that comprises a unique identifier of the task, a (compiled) user code block as task body, and a set of arguments for the code block. The arguments may specify the references to one or multiple memory objects that are inputs to the task and may specify the references to one or multiple memory objects in which outputs of the task are to be held. The units of computational work may be split into subtasks, provided it is not specified as an atomic task that executes as single block without interruption. Moreover, the units of computational work are not restricted to statements of a user program code, but may also include work related to data formatting (e.g. vectorization), address calculation (e.g. nested or flat access pattern definitions on vectors, matrices or tensors, such as stride access), prefetching, etc.

In embodiments of the invention, a user program is decomposed into a plurality of tasks that are created dynamically at run time. Decomposing the user program into tasks in accordance with a parent-child relationship results in a task tree structure in which each vertex or node of the task tree is associated with one of the dynamically created tasks. The dynamic decomposition of the user program into tasks can be constrained to follow user-specified task dependencies in the program source code, which are supported by the underlying programming model. A task that dynamically spawns one or more child tasks while running, corresponds to a parent node of the task tree structure, whereas the spawned child tasks correspond to child nodes that are directly connected to the parent node. In embodiments of the invention, tasks can do computational work and/or command the creation of child tasks. Tasks directed to pure computational work, which do not spawn any child tasks, correspond to leaf nodes of the associated task tree structure.

In the context of the present invention, a task is said to be 'pending' or in a 'pending state' if it has unresolved start dependencies and is said to be 'ready for execution' or in a 'ready for execution state' if it has no unresolved start dependencies. Only tasks that are ready for execution are allowed to run (e.g. executing the task code block) on execution hardware owned or controlled by the executor submodules of the distributed set of workers, e.g. by moving them into a separate ready task queue or, if the task has been stolen, by placing them in a stolen task buffer. Hence, tasks are eligible for execution by the executor submodules only if all its dependencies have been set and all its start dependencies have been cleared. There might be some delay during the moment in time when a task acquires the 'ready for execution' status and the moment in time when the task code is effectively executed on the local worker or a remote worker. During this time delay the task resides in the ready task queue of its creator worker and is eligible for stealing by other workers. More than just one task may be in the 'ready state' and await execution or undergo task stealing. Task stealing by a thief worker is momentarily unavailable, e.g. disabled, in embodiments of the invention in which task stealing has been temporarily suspended for the thief worker. Tasks that have been retrieved from the ready task queue of a worker module are no longer available for stealing either.

When a task is said to be put into a pending queue in embodiments of the invention, this is a short way of saying that a pending task object is created within the pending queue as a wrapper object for that task, which pending task object comprises a reference to the task (e.g. task object identifier) and further comprises a dependency data structure for the underlying task. Similarly, when a pending task is said to be moved from the pending queue into the ready queue in embodiments of the invention, this is a short way of saying that the task object referred to by the corresponding entry into the pending queue is pushed into the ready queue, without however carrying over the dependency data structure of the pending task object that continues to reside within the pending queue. When the task has been terminated, the corresponding pending task object is removed from the pending queue of the worker module in which the task was originally created, and the termination condition is signaled to all the worker modules that still hold pending task objects with respect to tasks that have a start or stop dependency on the terminated task in their respective pending queues. The start and stop dependencies of these dependent tasks are then updated accordingly. Likewise, migration of a task in the context of a successful task stealing request only implies the migration of the task object, not the corresponding pending task object which remains in the pending task queue.

Nonetheless, it is not a strict requirement of embodiments of the invention that the wrapper object that comprises the dependency data structure (pending task object) continues to reside within the pending task queue. In alternative embodiments, the wrapper object may be transferred and stored elsewhere, e.g. in the pending queue of a non-creator node, provided that it can be found back via its corresponding task object identifier and cleared when the corresponding task has terminated.

In the context of the present invention, a task is active or alive if it has not yet been executed or still has one or more outstanding child tasks (equivalent to unresolved stop dependencies) after execution. A task is 'done' or 'terminated' if all its stop dependencies have been resolved.

Executing a task, in embodiments of the invention, means carrying out the instructions associated with the task's code block on suitable execution hardware. A task is said to have finished execution if all the instructions of the task's code block have been executed by the execution hardware.

Tasks of or resulting from a task-based computer program can be scheduled by a distributed task scheduler, provided that data and control dependencies between tasks can be expressed in terms of start and stop dependencies, the tasks do not wait/block on results obtained from child tasks but create continuation tasks instead, the tasks do not rely on a call stack for the purpose of managing the program control flow, and the tasks do not have return statements (return address, return values). Task dependencies constrain the execution order of the tasks. Control flow dependencies like branching are amenable to regular start dependencies that are placed on a task which also contains a regular conditional statement to check whether the remainder of the task is effectively executed, possible in the form of a further subtask. Alternatively, conditionals and/or branching statements that influence the program flow can be part of a task's code block and combined with task spawning statements. For instance, the program statements (task code block) of a parent task could read as follows: 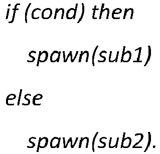 When this parent task is executed, the program statements of its code block will be executed sequentially, which includes the conditional. Depending on the evaluation of the condition, only one of the two branches is then executed. This results in either 'sub1' or 'sub2' being spawned as child task. At compile time the subtask to be spawned is usually unknown, but at runtime the correct part (i.e. branch) of program task tree/graph can be built dynamically.

Task outputs are stored as immutable output objects in a global memory structure that is accessible to all compute units of the distributed computing system. Tasks may therefore fetch task input data from previously created output objects (now acting as input objects) residing in the shared global memory. As such, the tasks of task-oriented computer programs do not admit references to other tasks or callable objects e.g. in the form of task object identifiers or equivalent task descriptions) as input arguments but only accept references to memory objects that exist, at runtime, the shared global memory. This contrasts with continuation-passing style (CPS) programming languages in which CPS functions receive a continuation, i.e. a function or function pointer, as an additional argument, and the CPS function returns control by invoking this continuation argument. Program control in CPS is explicitly passed by the continuation, whereas embodiments of the invention implement task dependency data structures and dynamic task scheduling to evolve the computer program.

A commonality between tasks in accordance with embodiments of the invention and CPS functions is that the program flow can be controlled without a return address saving call/program stack. In other words, tasks are allowed to spawn new child tasks but cannot invoke other tasks, and the code block of a task in accordance with embodiments of the invention cannot rely on a program stack for the purpose of managing the program control flow. This does not exclude the possibility of providing a private stack space for each task related to different purposes, e.g. to store local variables. Furthermore, a task in accordance with embodiments of the invention may recursively create new child tasks but does not or cannot pause its execution to wait for the results of those child tasks by means of a program stack or shared registers. Instead, tasks in accordance with embodiments of the invention communicate with other tasks through the memory objects, and task code blocks are expected to explicitly create continuation tasks that operate on the results of other tasks, i.e. operate on the output objects produced by those other tasks. As compared to subroutines in conventional direct style programming models, the creation of child tasks and sibling tasks as non-callable continuation tasks in accordance with embodiments of the invention does not imply the creation of a new stack frame. Not relying on a program stack, e.g. not implementing an inter-task program stack, has the advantage that task stealing and task distribution between the different worker nodes of the distributed task scheduler is greatly simplified, thus allowing the distributed task scheduler to perform and scale well on distributed computing systems with a shared global memory architecture. A further advantage of embodiments of the invention is that tasks are never blocking. Compared thereto, reifying program stacks on a different worker node, especially when the other worker node uses a different address space, is a very complex operation. Moreover, the migration of entire program stacks across the different workers would cause an important communication and energy overhead, which can be avoided in embodiments of the invention.

In embodiments of the invention, the memory objects that were ephemerally created within the shared global memory during the time of computer program execution are typically freed, erased or overwritten once the computer program has finished. For instance, a garbage collection process may identify all the object memory objects that relate to a particular computer program through their respective OIDs, erase the contents of the identified memory objects in the shared global memory, and release or delete the OIDs of the identified memory objects from a table of currently used OlDs (e.g. as maintained by a runtime management unit and/or process).

A distributed computing network, in embodiments of the invention, is a computing system, infrastructure or platform for parallel computing applications, which comprises a very large number of independent computation resources that are physically distributed across many nodes and connected with one another via a network. Computation resources are available at the different nodes and include general purpose processing units and/or computer cores, which may be clustered. In non-limiting exemplary embodiments of the invention, the distributed computing network may be a supercomputer, cluster computer, cluster computer or cloud computing platform.

In embodiments of the invention, the networked computation resources of the distributed computing system preferably share a common address space, e.g. are coupled to a shared memory system that is a globally available resource. The shared memory system may be accessible through the same network that connects the plurality of compute nodes or through a different network, and the shared memory system may be a flat or hierarchical memory system. It may be centralized into a single storage/memory device or composed of many different storage units or memory devices that are distributed across many storage nodes. When distributed across storage nodes, one or more of the compute nodes of the distributed computing network, e.g. all the compute nodes, may be collocated with the storage nodes.

A compute node is a scalable unit or building block for bigger compute systems like supercomputers or cluster computers. Compute nodes are replicated, typically a thousandfold or more, and assembled, e.g., into a supercomputer. A compute node contains at least one compute core and may contain additional components, such as runtime management units, object cache memory, node-local memory subsystems, object storage firewall, network interface, etc. Each compute core comprises a set of functional execution units.

A compute core, in the context of the present invention, refers to a set of functional execution units, including but not limited to algorithmic logic units, special function units and load-store-units, that is central to the compute node. The one or more compute cores are the node resources that are effectively executing program code at the application level; they therefore accept instruction code and input data to operate on and produce output data. The compute cores act on memory objects that reside in the shared global memory to gain access to the input and output data, i.e. the compute cores reference computational data to be loaded or stored in the shared global computer memory (main memory) through their corresponding memory objects. The shared global computer memory is the physical main memory of the distributed computing system, i.e. the working memory, which temporarily holds the memory objects that are created at runtime when executing the task-based computer program. That is the memory objects, in particular data-holding memory objects and memory objects derived therefrom, are ephemeral objects and not permanent. Of course, memory objects representative of work results obtained during program execution can still be copied to a hard drive or similar permanent storage devices for permanent offline storage even after program execution has finished. Both instruction code (e.g. task code) and data for execution by the cores are core inputs that can be accessed in the globally available, shared main memory and can be stored in the form of memory objects. Similar to memory objects, tasks that are scheduled for execution on one of the compute cores of the compute node can be encapsulated and represented as objects of a specific type (i.e., task objects), be assigned a unique task object identifier (task ID or TOID) and include references to one or more other memory objects, e.g. include a reference to the memory object that contains the task code, include references to functions that are stored or loaded as memory objects into the shared global computer memory, etc. Although inefficient in typical use cases, task objects can be temporarily dumped to the shared memory and later be retrieved therefrom. In such cases, the task ID, which is mainly used by the distributed task scheduler to distinguish between different task objects, should be complemented with or extended to a unique object identifier, which can be used to distinguish task objects from other memory objects within the shared global computer memory.

Compute tasks performed by the core may include the computational processes of arithmetic calculations on data stored in memory objects as well as address calculations. In embodiments of the invention, core inputs as well as tasks are requested, referenced and accessed through their corresponding memory objects. Memory objects may be stored in many different locations of the shared memory system, e.g. distributed across and stored in non-contiguous regions of the global shared main memory, or distributed logically or physically across a plurality of different storage units composing a shared memory system that is also distributed, e.g. a shared disaggregated computer memory. Hereinunder, the terms disaggregated memory and distributed memory are sometimes used interchangeably.

In embodiments of the invention, each compute node may comprise one or multiple CPUs that can be single-core or multi-core. In that case of having multiple cores arranged at each compute node, multiple tasks can be run in parallel on each compute node, provided their dependencies allow it. Each task could then be executed on a single core and different tasks are mapped onto different cores for execution. However, it is also possible to map each task for execution on multiple physical or virtual cores (even on a single-core machine that supports multithreaded execution). The executor submodule of a worker running on a particular compute node may comprise or be in command of one or multiple compute cores of that compute node.

Compared to node-local storage, which may be used to store prefetched copies of memory object fragments on the compute node and thus physically close to the compute cores, the shared or shared disaggregated memory acts as a global main memory and is accessible to and accessed by the many different compute nodes composing the distributed computing network, e.g. a cluster computer. From the perspective of each compute node, the shared or shared disaggregated main memory is acting as the working memory for that compute node. A data communication network generally separates the compute node from the shared or shared disaggregated main memory. The shared or shared disaggregated computer memory is used as non-persistent primary memory for the different compute nodes composing the distributed computing network and short-term storage of memory objects on the shared or shared disaggregated computer memory for the purpose of calculations and program execution is different from the long-term storage of data structures in file systems related to a secondary memory.

Memory objects, in the context of the present invention, refer to a format for storing and organizing information in a shared or disaggregated shared computer memory, e.g. the distributed shared memory of a cluster computer. Here, information relates to data in the broadest sense and includes, among others, compute core inputs (instructions/code, data/operands), metadata associated with the information that is stored in memory objects, tasks, higher-level instructions like subroutines and functions, or combinations thereof. Memory objects are thus a container for organizing and storing content-related information. Information is typically stored in a self-contained way in memory objects. That is, one part of each memory object is dedicated to the structured storage of content (e.g., code, data, data or code references) or references to the contents stored in other memory objects, whereas another part of the memory object is keeping a metadata structure as a description of the stored content (e.g., size of the memory object, content type, ownership data, access rights, timestamp information, object identification data).

Each memory object is also an ordered collection of non-contiguously allocated portions of computer main memory, designated as shards. A number of shards thus belong to and constitute together the memory object and, vice versa, each memory object is subdivided into a plurality of shards as basic units for memory location within the shared computer memory. Each shard of each memory object is stored at a unique location in physical main memory, preferably a disaggregated memory system, which is indicated by a physical memory address in a physical address space. That is, from the main memory perspective, the physical addresses of the fragments a memory object is composed of are preferably scattered across the physical address space associated with the computer main memory, e.g. a distributed main memory. Moreover, each shard of a memory object comprises a sequence of fragments as smaller subunits. It is thus also true that each memory object consists of a plurality of fragments. Fragments of memory objects are defined as the basic unit of information that the compute cores of the compute node grasp in response to memory access commands (e.g. read and write commands). The size of memory object fragments is at least equal to the word size of the compute cores in the compute node, but generally are larger than the compute core's word size, e.g. is a multiple of the word size. However, compute cores use an alternative addressing scheme (i.e. compute core representation of the memory object) when requesting access to memory object fragments. From the compute core perspective, each memory object appears as a single contiguous block of memory that is subdivided into fragments. A logical address space is associated with the memory object as abstracted memory resource, in which the fragments are linearly referenceable through an offset. In consequence, the memory addresses of fragments have to translated between the logical address space of the memory object and the corresponding physical address space of the main memory, e.g. the distributed shared memory, every time an exchange of memory object information is taking place between the compute node core(s) and computer main memory, e.g., during a memory access operation such as load/store operations. This underlying translation of fragments' memory addresses is performed by a memory object management unit and is completely hidden from the compute cores. Although bearing some resemblance with virtual memory architectures, the logic address spaces for portions of computer memory are implemented on a per-object basis instead of a per-process basis and compared to segmented or paged virtual memory resources, memory object fragments and shards are not continuously referenceable in main memory but optimized for uniform distribution across the physical address space.

Memory objects further have an object identifier (OID) assigned to them, so that one can distinguish between the different coexisting memory objects. Moreover, the fragments of memory objects may be grouped into larger context-related structures such as chunks or nested chunks, e.g. separate chunks for metadata, code and data. A chunk of a memory object is defined as a logical partition of the logical address space associated with the memory object. The chunk of a memory object typically counts many different fragments.

The present invention relates to a parallel or concurrent execution method for task-based computer programs on a distributed computing system or distributed computer architecture on the one hand, and distributed computing systems specifically adapted to allow the parallel or concurrent execution of task-based computer programs on the other hand.

The distributed computing system as contemplated in embodiments of the invention includes a plurality of networked compute nodes that are coupled to a distributed shared memory. The compute nodes are physically separate, replicable and scalable basic units that provide the computational resources of the distributed computing system. In addition to being capable of executing program-related tasks, each compute node also provides memory I/O functionality with respect to the globally accessible, shared memory. As such, the individual compute nodes do not only contain one or multiple compute elements for the actual execution of machine-readable instructions represented by the task's code segment, e.g. processor cores, but also comprise units for managing memory access requests issued by these compute elements. Each compute node may further be equipped with additional functional circuitry, e.g. including but not limited to units for managing network access (e.g. network interface units), a node-local or intra-node communication network (e.g. an NoC interconnect fabric), dedicated hardware for the runtime management of tasks and task distribution across the interconnected compute nodes, node-local memory, e.g. for caching of task objects or memory objects that are inputs to or outputs of the tasks that are executed locally on that particular node during runtime. The compute nodes are individually addressable through corresponding network addresses.

The globally accessible shared memory acts as the computing system's main physical memory vis-à-vis the collection of compute cores, i.e. is responsible for the temporary storage of the original user program code or its compiled version, the storage of data input and data output memory objects with respect to tasks that are dynamically generated in the course of executing the user program (e.g., during task tree decomposition), and the storage of input and output objects that hold code arguments. The network that connects the compute nodes with each other also connects each compute node to the globally accessible shared memory, i.e. the inter-node communication network separates the compute nodes from the shared memory. Preferably, the globally accessible shared memory is composed of a plurality of individually addressable memory modules or storage units (e.g. network-attached DRAM modules) that can be distributed across a plurality of storage nodes having different physical locations, thereby forming a distributed shared memory, also referred to as disaggregated computer memory. Memory disaggregation exposes the totally available physical memory capacity available as a pool of remotely located memory resources (decoupled from the computational resources) that are shared across the compute nodes over the network. Nonetheless, compute nodes may be provided with a limited amount of node-local memory, e.g. cache memory, which enables prefetching of memory objects that contain task input data or task input variables closer to the compute node's compute elements where a particular task has been scheduled for execution during runtime. In embodiments using a disaggregated shared computer memory, the disaggregation may be obtained physically, logically, or a combination (hybrid) of both. In a physically disaggregated shared memory, the memory resources are not collocated on the compute nodes, i.e. are separated from the computational resources of the compute nodes by the network, whereas in a logically disaggregated shared memory the memory resources of the distributed computing system are collocated with the compute nodes, but accessing data stored in a memory resource on a remote compute node by a compute element of another compute node still requires the exchange of data over the network. In embodiments of the invention using hybrid disaggregated shared memory, a part of the memory resources is collocated with compute nodes, but another part is not. A uniform memory access latency can be obtained on average in embodiments of the invention in which consumer data (i.e., data that is required by the various tasks executing on the compute elements of the different compute nodes during program execution, at runtime) is distributed uniformly across the physical address space associated with the disaggregated shared (physical) main memory, hence is distributed uniformly across the different memory resources (storage nodes, storage units) composing the disaggregated memory. This can be achieved by storing the data.

Tasks related to a task-based computer program, including dynamically created tasks, are represented as task objects, which are a particular type of objects in embodiments of the invention. Unlike memory objects (e.g. data-containing memory objects, application objects, code-containing objects), the different task objects are generally too short-lived to store them as memory objects in the shared global computer memory. Instead, the task managers sustained and running on the different compute nodes, which together may form a distributed task scheduler, typically store the task objects in their own private memory space. Hence, task objects are usually spread out over the different task managers. In embodiments of the invention, each task object holds a reference (e.g. pointer) to the task code that the task will execute, a task ID, a dependency data structure for tracking start and stop dependencies related to the task, and information about the creator node (e.g. a node ID or network address of the compute node that allows identification of the compute node on which the task was originally created). In the context of task or workload distribution, such as task stealing, tasks may be copied from the private memory space of one task manager into the private memory space of another task manager by means of a message. Task copying includes the copying of the reference to the task code to be executed as well as including a link to the creator node, but typically excludes the copying of the dependency data structure. A copied task uses the same taskID that has been assigned to the originally created task, which is a globally unique identifier per task. The task code that the task object is referring to may be stored as one or multiple code-containing memory objects in the shared global computer memory, where it can be accessed by the different compute nodes of the distributed computing system. Alternatively, the task code that is referenced by the different task objects may be part of a larger binary resource that is shared among or copied to the different compute nodes.

In embodiments of the invention, task inputs and outputs are typically represented as application objects, which refer to one or multiple data-containing memory objects. At the memory side, each memory object, including (task) code and application objects, amounts to a distributed collection of memory fragments or memory fragment groups in the shared memory, usually a large number thereof, which is identified by a unique objected identifier. Each memory object further has a logical linear address space associated therewith, which is used to represent memory object data at the computation side, e.g. for the purpose of task execution by the compute elements of the different compute nodes. The collection of memory fragments or memory fragment groups pertaining to the same memory object can thus be distinguished by their different offsets into the corresponding logical address space. Compute resources on each compute node access memory objects linearly to retrieve memory fragments, provided they are in possession of the respective object identifiers.

As a result, data requests by the compute resources within each compute node that are directed to the shared memory first undergo an address translation process. In embodiments of the invention, the address translation implies the calculation rather than the look-up of the physical memory addresses corresponding to the location of the requested data within the globally accessible shared memory, wherein the calculation is based on the evaluation of a function that uses the object identifier of the data-containing memory object and the requested data's offset in the logical address space associated with the memory object as function arguments. This address calculation function may be a hash function, which uses the object identifier and offset as has keys when calculating the physical memory address as the has value or output. This has the advantage that the physical addresses and storage locations for the collection of memory fragments or memory fragment groups pertaining to the same memory are distributed uniformly over the global physical address space and hence over the available memory resources, i.e. the globally accessible shared memory preferably adopts the structure of a distributed hash table and in data-containing memory fragments or fragment groups of many distinct, sizeless memory objects can be stored as entries in this distributed hash table. Here "sizeless" means that the size the memory objects takes as a memory resource in the global memory does not have to be known or allocated in advance. Data can simply be written to a number of fragments or shards (groups of consecutive fragments) within the memory objects, without having to allocate this number of fragments or shards. In practice, the finite bit length of the computed hash code does put a constraint on the maximum allowable size/capacity of memory objects in the global memory. Yet, this maximum allowable size is huge for typical lengths of hash code-based addresses, e.g. 64bit addresses, and is rarely if never used in its entirety. Moreover, a portion or all the function output may be interpreted as a network address. For instance, a bitfield portion or the complete hash value calculated by the function can be used to determine the storage node location in the network of the distributed computing system where the memory object fragment for the requested data is stored.

The preceding calculation of physical memory addresses with respect to the shared global computer memory must be distinguished from the way logical address information may be obtained in embodiments of the invention. Indeed, it is possible that compute cores or address generation units associated with or integrated into the compute cores are configured to perform mathematical functions or look-up operations over the logical address spaces of the underlying memory objects when accessed according to a specific pattern. For instance, linear operations of the scale-and-shift type may be applied to the logical address spaces of memory objects to realize a stride access pattern on the set of data elements/fragments present in the memory object. Likewise, indirect addressing or indirect referencing to data elements/fragments of one or more underlying memory objects may be used in embodiments of the invention in which a set of offsets into the logical memory space (e.g. index list) of a first memory object is stored in a second memory object, wherein the first memory object may itself represent a selection of data elements from a third memory object. This computation or look-up of logical memory addresses for data fragments of memory objects that are effectively consumed by the compute cores is done on the flight (and on demand) and often is more efficient than having to copy large parts of the memory objects of which ultimately only a small number of data elements/fragments are used in compute core operations. This means that unnecessary copying of large amounts of data can be avoided when only particular, user-specified selections of data elements from one or more underlying memory objects are needed for computations by the compute cores. As explained before, the logical memory addresses - even the ones obtained by logical address calculations or look-up - still need to be translated into corresponding physical addresses for the shared global computer memory, using a deterministic function.

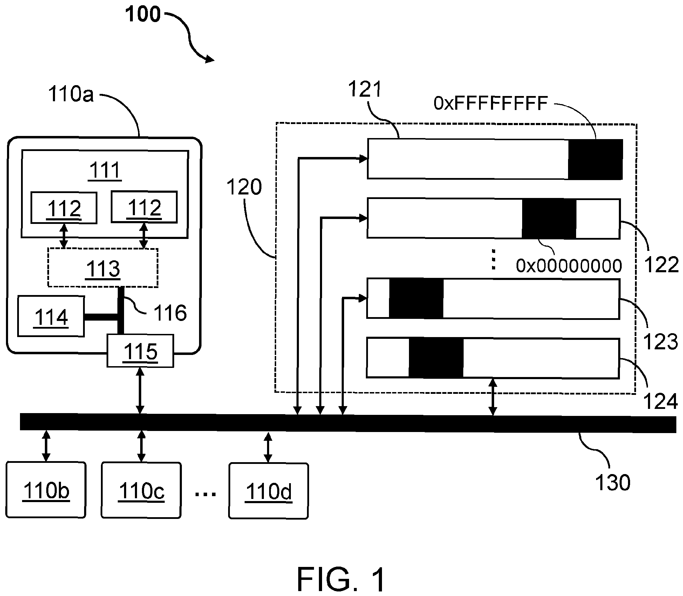

With reference to FIG. 1, a distributed computing system 100 for concurrent or parallel execution of task-oriented computer programs in accordance with embodiments of the invention is shown. The distributed computing system 100 comprises a plurality of interconnected compute nodes 110a to 110d and a globally accessible, shared computer memory 120. The shared computer memory 120 may be a distributed computer memory, comprising or consisting of a plurality of memory units or storage nodes 121 to 124 such as a plurality of physically separated memory modules, e.g. DRAM modules. That is the computer memory is a disaggregated computer memory that is shared by and globally accessible by the plurality of compute nodes. Different portions of the distributed or disaggregated computer memory may be collocated on respective ones of the plurality of compute nodes, e.g. as memory modules or memory units comprised by the respective compute node, or may be implemented as standalone storage nodes coupled to the network of compute nodes. Each storage node or memory unit typically contains a network interface and a memory module with memory controller (not shown). Each compute node 110a-d typically comprises a runtime manager (RTM) 111 - a subsystem that implements the execution model of the concurrent programming model/language. A typical RTM on a compute node comprises software components and supporting hardware that create the runtime environment needed for locally managing task creation, task dependency tracking, and task execution on that compute node. Alternatively, the RTM may be purely hardware-implemented or purely software-implemented. Moreover, the RTM subsystems of all the compute nodes are allowed to communicate with each other, through the inter-node network 130 or a dedicated messaging network, to form a distributed task scheduler which coordinates the distribution of tasks across the different compute nodes. Only tasks that are in the 'ready for execution' state, i.e. not having any unresolved start dependencies, are eligible for distribution and can be migrated from one compute node to another remote compute node. In embodiments of the invention, a task migration between compute nodes of the distributed computing system amounts to a transfer of a reference to the task's code block and source address information, but the task's dependency data structure remains located on the source node. Importantly, migrating a task between compute nodes of the distributed computing system does not involve the transfer of a call stack or of any code arguments (e.g., task inputs and task outputs). This is a result of the global accessibility of memory objects residing within the shared memory, the capability of computer program tasks to create child tasks for continuation of the still remaining computational work, and the creation and management of the task dependency data structures. Output data from the parent task is written to the globally accessible shared memory and turned into an immutable memory, and a later task subsequently accesses the immutable object through its object identifier as reference and retrieves the required data therein. As explained further below, the RTM of each compute node can be used to instantiate a worker module on that compute node, thus effectively allowing the creation of a network of distributed worker nodes.

Furthermore, the RTM of each compute node is configured to:
o control the access privileges of tasks to memory objects residing in the globally accessible shared computer memory, as well as to local copies of these memory objects, e.g. by modification of the access rights and ownership information in the metadata chunk of the memory object;
o request or instruct the globally accessible shared computer memory to store task outputs as immutable objects in the globally accessible shared computer memory when a task of the task-based computer program has finished executing, wherein a unique object identifier (OID) is assigned to each object to be stored in the globally accessible shared computer memory;
o request or instruct the globally accessible shared computer memory to retrieve task inputs from immutable objects stored in the globally accessible shared computer memory by reference to the corresponding object identifier.

In embodiments of the invention, the inputs and outputs of tasks are stored as immutable memory objects in the globally accessible, shared computer memory during the time the computer program is running. More specifically, a task that is running on one of the executor submodules of the distributed work scheduler is given temporary write access to an output object (memory object in the shared memory whose purpose is to hold task outputs, e.g. computed intermediary or final results). This task then owns the output object. This means that a local version of the initially empty output object becomes writeable with respect to its owner task. This initial local version of the output object can be understood as an initial although empty working copy of the memory object, which has not yet been written back to the shared global memory. The copy is empty as it has been declared just before calling the task and therefore does not have any contents yet. The working copy/initial version of the output object is created locally on the compute node where the owner task is executing, e.g. in the executor submodule that runs the owner task. After completion of the task's code blocks, the write access right to the output object is removed and the local working copy/version of the output object is flushed to the read-only shared global memory. At this moment, the output object then becomes globally accessible by all the other compute nodes, provided the corresponding OID has been revealed. Child tasks or sibling tasks whose inputs depend on the previously computed data of the output object, e.g. tasks comprising the OID of the output object as input argument, are granted read-only access by default. In consequence, the memory objects manipulated by the tasks are effectively treated as immutable objects. Tasks that require the modification of data present in one of the memory objects will first create new memory objects that are copies of the memory objects of which the content has to be modified. Using immutable memory object for task inputs and outputs has the advantage that synchronization means such as locks or barriers are not required when the concurrently or parallelly executed computer program code requires access to the global shared memory.

One or more compute cores 112 provide the execution hardware units that carry out the machine language instructions contained in the body or code block that is associated with each task, once the task has gained the 'ready for execution' status. The compute cores 112 may be any register-based processor core with RISC, else or VLIW-type architecture as known in the art. A typical compute core comprises multiple functional hardware units (e.g. instruction unit, execution units, control unit) and register sets as components. The functional units, in turn, may be constructed from several different or repeated subcomponents; the execution unit, for instance, may comprise one or multiple arithmetic logic units (ALUs), one or multiple floating-point unit (FPU), a load-store unit, etc. The cores 112 of the compute nodes can execute computational tasks with respect to any memory object; different memory objects being distinguished through different addresses at the core level (e.g. the OID is part of the address at core level). Machine language instruction pertaining to address calculations may be carried out by the compute cores 112 and/or dedicated address generation units in close proximity to the cores 112.

The compute cores 112 may be coupled to the distributed, shared computer memory 120 through an object cache 113 of the compute node. Compute cores 112 requests to access memory object fragments may be served directly by the object cache 113 in the case of a cache hit. It is worth noting that a very high cache hit rate can be obtained in embodiments of the invention, because memory objects that are task inputs are known prior to task execution and addresses of memory fragments in the global shared memory can be calculated by a mathematical function, e.g. hash function. Therefore, only data that is really required for computations on the compute nodes is prefetched into the cache, which optimizes cache utilization, improves the cache hit rate and avoids cache pollution. Caching memory objects is advantageous as it allows to further reduce the latencies of computer memory operations. Nonetheless, cache-free implementations are also feasible in alternative embodiments of the invention.

A memory object management unit (MOMU) 114 is configured to calculate the physical memory addresses of memory object fragments inside the distributed computer memory 120 for which memory access has been requested by one of the compute cores 112. The MOMU 114 and the object cache 113, as well as other components of the compute node, are capable of exchanging messages over a node-local communication network 116, e.g. a system bus or a network-on-a-chip (NoC). A communication interface 115, e.g. a cluster network interface, connects the compute node 110a to a cluster-wide communication network 130. The other compute nodes 110b-d and the individual storage nodes 121 to 124 of the distributed shared memory 120 are also connected to the cluster-wide communication network 130. A unique network address is assigned to each addressable end node of the cluster-wide network 130, including the compute nodes 110a-d and the storage nodes 121 to 124. A portion of the physical memory addresses calculated by the MOMU 114 of each compute node, e.g. a bit field of predetermined length, preferably corresponds to the unique network address of one the storage nodes 121 to 124. The fragments of a single memory object are scattered across the different storage nodes 121 through 124 and indicated as black regions in their respective physical memories.

The memory object management unit 114 resembles the memory management unit (MMU) of conventional computer architectures in that it contains hardware for address translation. Traditionally, the MMU is configured for paging, i.e. the division of virtual address spaces into pages, and translation of virtual addresses into physical memory addresses by the use of page tables. Page table entries may be partly held in private memory of the MMU or a translation lookaside buffer (TLB), operatively coupled to the MMU, to assist the MMU with the address translation task. TLB misses cause the CPU or the operating system to start a page walking process in which page table entries are retrieved from main memory. The MMU is also responsible for raising page fault exceptions in the event that no page table entry is found in main memory with respect to the virtual memory address currently being translated. A conventional MMU thus spends considerable amounts of time and energy to perform address translations by lookup operations in page tables.

In contrast thereto, the memory object management unit (MOMU) in accordance with embodiments of the present invention is configured to derive the physical memory address corresponding to the memory object fragment that is referenced by the compute units or cores by way of calculation. More specifically, the MOMU calculates the physical memory address as a mathematical function of the fragment offset and the OID for the memory object that contains the referenced fragment. In preferred embodiments of the invention, the MOMU calculates the physical memory addresses according to a hash function - the shared computer memory is then configured as a distributed hash table, wherein each object fragment in the globally shared computer memory corresponds to a stored value of the distributed hash table and a physical memory address of the object fragment corresponds to an input key for querying the distributed hash table. Hence, no lookup operations for page table entries are necessary, page tables do not have to be maintained in computer memory and page fault exceptions never occur. An OID generation unit of the MOMU may be configured to issue new OIDs in response to an OID request from a requester, e.g. the RTMs 111 of the compute nodes which request new OIDs for memory objects pertaining to child tasks or memory objects pertaining to task inputs or outputs, e.g. result of a mathematical computation or transformation (number or vector addition, multiplication, scaling operations or more complex arithmetic functions such as logarithms, exponentials, or trigonometric functions, and others). In embodiments of the invention, the MOMU may generate the OID as a snowflake ID, e.g. combine timestamping information and a node identifier (unique) to obtain a memory object identifier (OID) that is unique. In alternative embodiments, the OID generation unit of the MOMUs can be implemented, e.g. embedded, in the RTMs 111 of the compute nodes.

A particular type of memory access request messages is concerned with memory object manipulations that target the metadata associated with memory objects, e.g. metadata stored in a dedicated metadata chunk of the memory object, which also includes security attributes (access permissions) related to the memory object. These memory object manipulation operations may be handled by an object manipulation unit of the MOMU. They may include the splitting or merging of two distinct memory objects, the change of access permissions, and others. In some embodiments of the invention, an object storage firewall may be provided as part of each compute node, which is configured to manage privileges, verify and grant access rights related to memory objects, or parts thereof, when passing through the MOMU.

In preferred embodiments of the invention, a portion of the calculated physical address, e.g. the k most significant bits, directly form a corresponding network address for one of the memory modules of the global shared memory, whereas the least significant bits can be used by a local memory controller of the receiving memory module to determine the storage location within this memory module. Alternatively, a network address for the physical address can be obtained by calculation or via a lookup table.

In contrast to conventional compute architectures, information stored in the framework of memory objects does not have to undergo a lengthy search. When information is fetched from a remote node in traditional implementations multi-node compute clusters, the requesting node first checks all its cache levels before the operating system is queried, sends a message to the remote node, retrieved the requested data and finally hands it over to the requesting node. In embodiments of the invention, no such complex information retrieval process is necessary, because the MOMU of the requesting compute node can exactly locate the requested piece of information in memory through a calculation of the physical memory address. A network packet can then be issued directly to the distributed memory controller whose store unit holds the information. Hence, neither the operating system nor a central database is involved in the information retrieval, whereby resources and latency related to information access are significantly reduced.

In embodiments of the invention, stored fragments of each individual memory object are scattered over the whole distributed, shared and globally available computer main memory, e.g. distributed in a random and uniform manner over the physical address space associated with the global shared memory of the distributed computing system. The MOMU of each compute node can quickly compute the physical memory address corresponding to memory fragments accessed by the compute cores of that same compute node and thus gather memory object fragments that are scattered over many remote store nodes in a node-local prefetch memory (local memory subsystem of the compute node). Stored memory object fragments can also be shared among multiple tasks that are executed on different compute nodes. Tasks executed on one compute node generate memory objects that normally cannot be accessed in the shared computer memory through MOMUs of different compute nodes, because their respective OIDs are dependent on the compute node and will not be known by other compute nodes. However, compute nodes may still exchange OID information in the context of task distribution, e.g. via a task stealing approach.

In order to access memory object content on a different compute node than the compute node that first created this memory object, the object storage firewall of the different compute node may first verify that the correct access rights have been granted. For instance, read permissions may be granted for a pool of tasks that have been assigned to the same first security group, e.g. user group, irrespective of the compute nodes cores that are actually executing the tasks. If no or insufficient/wrong access rights have been granted, the access will be denied. Typically, only the owner task of an OID can write, while others have read access. Software locks may be used to handle write permissions set by the programmer.

As described previously, the compute nodes composing the distributed computing system may each contain an object cache memory that is storing memory objects, or relevant parts thereof, at the compute node level. Even though it is feasible to maintain more than one local copy of a memory object, or fragments thereof, in a corresponding number of compute nodes, not every compute node is allowed to modify or write into a memory object that is a shared resource. More specifically, only the node-bound task that caused the generation of the memory object as shared resource may have the right to alter the contents of the memory object, while tasks that are not native to the node are lacking these rights. Tasks running on different nodes may still be able to read information content of shared memory objects that are stored in the local object cache memory. Due to the implementation of the task dependency data structures, no consumer task is spawned while a producer task is running on the same object such that write inconsistencies in shared memory objects are avoided.

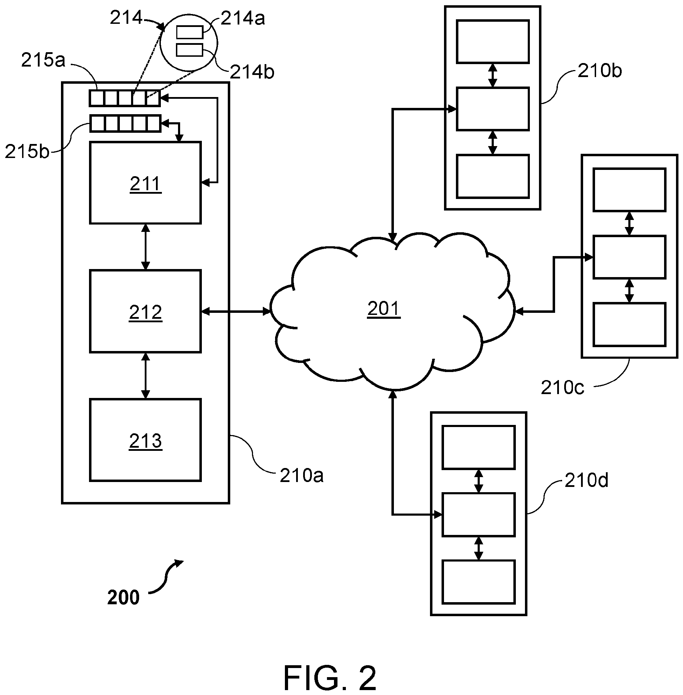

With reference to FIG. 2, instantiations of workers on different compute node of the distributed computing system are shown, whereby the set of instantiated workers form worker nodes of a distributed work scheduler 200 to be deployed on the distributed computing system. The instantiation of workers is one example of providing the necessary hardware and/or software components, e.g. a runtime environment, for carrying out the parallel and concurrent program execution methods according to embodiments of the invention.

The work scheduler 100 comprises a collection of worker instantiations 210a-d that are configured to run in parallel on the different compute nodes of the distributed computing system. Network 201 interconnects the different worker modules 210a-d, which allows point-to-point communication and message exchange between any pair of workers. Furthermore, each worker 210a through 210d of the distributed work scheduler 200 comprises at least the following submodules: a manager or management submodule 211, a message channel 212, and an executor or execution submodule 213. The message channel 212 of each local worker (e.g. worker 210a) operatively connects the manager 211 to the corresponding executor 213 and further to the managers of all the remote workers (e.g. workers 110b-d) via the communication network 201. Any message sent between manager 211 and executor 213 is handled by channel 212.

Each worker 210a through 210d can be implemented as a software module, a hardware module or a hybrid module on a corresponding compute node of the distributed computing system. In a hybrid module, the running of software (e.g. compute node firmware for the worker) is supported by dedicated hardware components. If in embodiments of the invention the workers are fully or partly implemented in software, this software is preferably executed by the hardware units of the compute node RTMs.

The manager 211 of each (local) worker is configured to perform at least the following actions:
∘ create tasks dynamically in a parent-child relationship, thereby enabling the decomposition of a computer program into a plurality of tasks at runtime;
∘ add dependencies to the created tasks to constrain an execution order thereof, including the addition of stop dependencies for parent tasks with respect to newly created child tasks and the addition of start dependencies for sibling tasks that are subject to the prior execution of at least one other sibling task;
∘ terminating the created tasks that have finished execution on the execution units of the different compute nodes and no child tasks outstanding;

The decomposition of the computer program into a plurality of tasks is a global process to which usually all the workers will contribute eventually. This is a consequence of moving tasks between pairs of workers, e.g. in the event of successful task stealing requests, and allowing the migrated tasks to spawn child tasks at their new locations. The task creation actions of all the worker managers of the distributed work scheduler have the combined effect of gradually constructing a rooted tree structure during runtime - the dynamic task tree for the computer program. A root node of the dynamic task tree represents the launching of the computer program as the initial task, e.g. the main or first task to be divided into a plurality of smaller tasks, and each further tree vertex or node represents one of the subsequently created tasks. A parent task thus always has a corresponding parent node in the task tree and the spawning of child tasks by the parent tasks corresponds to appending further child nodes (in the form of leaf nodes) to the common parent node of the tree structure. If a parent node has more than just one child node in the task tree, the further child nodes are referred to as siblings. By analogy, child tasks originating from the same parent node are considered to be siblings or sibling tasks. Each task that is represented by a node of the dynamic tree structure refers to a unit of computation work to be mapped to an execution hardware unit owned or controlled by one of the executors 213 of the distributed work scheduler 200. The main task of a task-based computer program is executed automatically by the runtime system/environment. Tasks are independent work units that can be executed concurrently and in parallel, provided their mutual dependencies allow so. It is typical for dynamic and irregular computational problems that their corresponding task trees are not known or impossible to plan in advance, such that the task tree structures for the corresponding computer programs cannot be obtained statically at launch time but have to be built dynamically at runtime. Trees are a special class of directed acyclic graphs, in which each node except the root node has exactly one parent node.

In embodiments of the invention, the execution order of the created tasks is constrained and controlled by start and stop dependencies. A task's start and stop dependencies are managed attributes related to this task. The manager 211 of each worker module 210a-d is responsible for the creation and updating of the start and stop dependencies. More specifically, the manager 211 may be configured to create and manage a dependency data structure in respect of each one of its locally created tasks. This dependency data structure is used to hold and update counters corresponding to the start and stop dependencies. Each dependency data structure is created with respect to a task object which encapsulates and represents a particular task of the task tree structure during runtime. The dependency data structure may be linked to a particular task object by reference to its identifier. Rather than being an independent object, the dependency data structure is a local structure that is owned by its creator, i.e. the manager that created the data structure and the corresponding task. Therefore, the dependency data structure resides within the creator manager until it is destroyed, regardless of whether the corresponding task stays on the same worker module or is moved to some remote worker module. This means that the managers of the different workers have to inform each other about tasks which have migrated between worker nodes and are executed on a worker node that differs from the worker node whereon the task was originally created.

When a parent task is spawning a child task in accordance with embodiments of the invention, the stop dependency counter of the parent task is incremented by one count and a reference to the parent task, e.g. the task identifier, is preferably retained in the dependency data structure of the spawned child task. This way, the parent task will get notified upon completion of the child task and the stop dependency counter for the parent task will be decreased by one count. This equally applies to parent tasks which are themselves child tasks. Furthermore, the start dependency counters of a freshly created child task is set to the number of sibling tasks it depends on and a reference to the freshly created child task, e.g. the task identifier, is preferably retained in the dependency data structure associated with the respective one of the sibling tasks. This way, a child task that is subject to the prior execution of one or more of its sibling tasks will get notified upon completion of the one or more of its sibling tasks and the stop dependency counter for the child task that is subject to the prior execution of the one or more of its sibling tasks will be decreased accordingly.

In embodiments of the invention, any start dependency may be expressed through a 'then' construct of the programming model, e.g., [task '1' ... task 'n' ] *then* task 'x'. In this construct, task '1' to task 'n' are references to other spawned task(s) created during the execution of a currently running task 'T'. Executing this construct yields a reference to task 'x'. A reference to the currently executing task 'T' is usually not available for use by the programmer.

Dependency tracking by the manager 211 may be stopped for a task, and the corresponding pending task object and dependency data structure released or destroyed, when the task has terminated. In embodiments of the invention, a task terminates after having finished execution on execution hardware comprised or controlled by the executors of the distributed work scheduler 200 if all its stop dependencies are also resolved, e.g. when the stop dependency counter has reached a 'zero' count. Otherwise, the task has been executed successfully but has not yet reached termination, i.e. its corresponding task object and data dependency structure are still pending. Termination of a task also involves the notification of its direct parent and all possible siblings about the termination by the manager 211. This way, the parent's stop dependency and the siblings' start dependencies with respect to the terminated task can be removed accordingly. Therefore, the manager 211 of each worker instantiations is also adapted to track the start and stop dependencies of all non-terminated tasks that were originally created by that manager, regardless of the task locations at a later moment in time. This means that the dependencies are also tracked for a task that has been moved to a remote worker and therefore no longer resides on the local worker.

In preferred embodiments of the invention, each worker 210a-d may further comprise a at least a first and a second task queue 215a, 215b in operative communication with the respective manager submodule 211. The first task queue 215a is configured to support enqueuing and dequeuing of tasks whose status is 'pending', whereas the second tasks queue 215b is configured to support enqueuing and dequeuing of tasks whose status is 'ready for execution'. In consequence, the first and second tasks queues are task status-dependent queues and may also be referred to as the pending queue 215a and the ready queue 215b. Preferably, the ready queue 215b is implemented as a double-ended queue or deque, thus allowing the pushing of more recent tasks with the 'ready for execution' status on one end of the deque and the popping of older tasks with the 'ready for execution' status from the other end of the deque. The pending queue 215a may be implemented as a single-ended or double-ended queue; the order in which pending tasks are stored in the pending queue is irrelevant. A map can be used to retrieve a pending task object through its corresponding task identifier from the pending queue. The two task queues 215a and 215b may be software queues, hardware-supported queues or hardware-implemented queues with a properly designed interface for communication with the manager 211. Additional task queues may be defined in software and/or hardware, such as a further queue for created tasks, which holds tasks that have been created but not yet released for scheduling by the (distributed) task scheduler, a queue for running tasks (e.g. currently executing tasks) and a queue for tasks that have finished executing (e.g. tasks that are done). Tasks may have been created but not yet scheduled, e.g. not yet moved to the pending/waiting or ready task queues, if other sibling tasks still have to be created, which would modify the initial counters for the number of start and/or stop dependencies. Created task may be placed on the appropriate task queue 215a or 215b, depending on their start dependency count, by a corresponding 'ScheduleTask' message to the task manager. For instance, a parent task currently under execution may send a 'ScheduleTask' request/message to the task manager 211 once all the sibling tasks have been created. Scheduled tasks in the ready task queue may be sent to available execution hardware by the task manager at any moment. This means that the corresponding task object may be placed onto the running task queue while the task code referred to by the task object is fetched and passed to the executor 213 for execution. As soon as the task code has completed execution, the task manager may move the corresponding task object from the running task queue to the finished/done task queue. The executor 213 may send a 'TaskDone' message to the task manager 211 to this effect. In embodiments of the invention, the manager 211 generally has exclusive access to the task queues, e.g. the first and second task queue 215a, 215b. The first and second task queue may be implemented explicitly, e.g. as hardware queues, whereas the created task queue, the running task queue and the finished task queue may be implemented implicitly (e.g. via the existence of a non-empty dependency data structure in the pending task queue, the validity of a task code reference in the task object or a running/run flag in the task object, etc.).

The manager 211 of each worker may be configured to change the status of a task residing in the pending queue 215a from 'pending' to 'ready for execution' and initiate the transfer of the task to the ready queue 215b if all the start dependencies for this task have been resolved. Tasks residing in the ready queue 215b are available for execution by the executor 213 or migration to a remote worker when accepting a task to be transferred/distributed. The manager 211 of each worker may further be configured to access the channel 212 for sending tasks having the 'ready for execution' status to the executor 213 if at least one execution hardware unit comprised or controlled by the executor 213 is idle and change an execution status variable from 'idle' to 'running'.

In embodiments of the invention in which the executor of a worker node comprises or controls more than just one execution hardware unit for the execution of tasks, the manager of that worker may be configured to select the execution hardware unit of the executor on which the task shall be executed. In such embodiments, the manager marks the execution status of each execution hardware unit separately as 'idle' or 'running'. Here, the execution hardware unit(s) for the execution of tasks usually corresponds to the compute elements (e.g. the one or more compute cores) of the compute node on which the worker and its associated executor are instantiated. Additionally, the manager may access the channel for sending several tasks having the 'ready for execution' status to the executor, provided a corresponding number of execution hardware units comprised or controlled by the executor are marked as 'idle'.

In embodiments of the invention, the pending queue 215a of each worker instantiation is adapted to hold a list of pending task objects. Pending task objects are wrapper objects for the dynamically created task objects. When the initial dependency data structure related to a spawned task has been determined, the spawned task assumes a 'pending' state and the task wrapper is placed on the pending queue if the task has unresolved start dependencies. Otherwise, the task object may be placed directly on a ready queue 215b, and the spawned task assumes a 'ready for execution' state. At this point, the distributed work scheduler takes over the responsibility for the task from the programmer. Each wrapped and pending task object 214 residing in the pending task queue 215a and each task object residing in the ready queue 215b is supplemented with a separate data structure that holds the dependencies of the underlying task. The dependency data structure of a task object 214 may comprise a set of counters 214a and 214b, respectively counting the number of start dependencies and stop dependencies pertaining to each active task. A task is active as long as it has not been terminated, i.e. as long as the task has not been executed or still has outstanding and unfinished child tasks. The dependencies are usually not all known upfront by static analysis of the program but become known when the program is run. The manager 211 may add a start dependency to a task by incrementing a start dependency counter for this task and remove a start dependency by decrementing the corresponding counter. Similarly, the manager 211 may add a stop dependency to a task by incrementing a stop dependency counter for this task and remove a stop dependency by decrementing the corresponding counter. When a task is free of any start dependency, e.g. if the corresponding start dependency counter equals zero, all the start dependencies are said to be resolved for this task. Idem for the task stop dependencies. Counters are a simple way of keeping track of a task's unresolved dependencies.

As explained before, the managers of the worker modules are responsible for keeping track of the dependencies of all existing tasks, as well as of all the task references for which notification about task termination is required. To this end, the managers 211 of the workers may be configured to listen to channels 212 for incoming messages from the corresponding executors 213; in particular messages containing task creation requests, requests for addition of task dependencies, and task execution confirmations. To avoid data race conditions, the managers of the different workers each enforce the rule that a created child task cannot be scheduled for execution until all its siblings have been created. This means that the child task remains in a pending status until all its siblings are created successfully. Enforcement of this rule can be achieved by appropriate language constructs of the programming model and checked by the compiler.

Moreover, the managers of all worker instantiations across the different compute nodes of the distributed computing system communicate with each other to facilitate the distribution of the locally created tasks. Only created tasks which have all the start dependencies resolved are eligible for distribution across the different compute nodes. Preferably, tasks are only distributed once; the worker that receives a previously distributed task accepts and executes the received task as soon as possible, thus avoiding a re-distribution of already distributed tasks.

Many centralized and decentralized work distribution schemes are known in literature. In embodiments of the invention, a decentralized distribution mechanism for tasks in the appropriate state is preferred, which only requires minimal communication overhead. One example of such a task distribution mechanism is a task stealing mechanism, in which idle workers lacking work in the form of 'ready tasks', locally available for execution, issue task stealing requests to remote workers. A busy remote worker that has one or more 'ready tasks' awaiting execution may then respond positively to such a task stealing request from a 'thief worker' and become a 'victim' by initiating the transfer of one of its locally available 'ready tasks' over the network 201 to the thief worker. Therefore, the manager 211 of each worker 210a-d may further be configured to:
∘ issue a task stealing request to a remote worker if none of the tasks present in the local worker has the 'ready for execution' status;
∘ accept migration of a task from the remote worker module, referred to as the stolen task, in response to the task stealing request, provided that the stolen task has the 'ready for execution' status.
Distributed computing systems with globally accessible shared computer memory do not put any restrictions as to where a to be transferred, e.g. stolen, task can be moved. The worker module residing on any one of the compute nodes has access to the shared computer memory. This does not preclude the possibility of prefetching of compute data from the globally available shared computer memory into caches or cache-like structures (e.g. memory subsystems) of the compute nodes whereon the stolen task resides, whereby locality of data is further improved.

In alternative embodiments of the invention, other task distribution mechanisms may be implemented. For instance, a centralized task scheduler may monitor the activity or number of enqueued tasks on each compute node and command the migration of 'ready' tasks from high-activity or busy compute nodes to low-activity or idle compute nodes. Additionally, or alternatively, the centralized task scheduler may distribute available 'ready' tasks by matching an anticipated need for computational power/resources with a list of reported computational power/resources currently available on each one of the different compute nodes.

According to yet another alternative, tasks in the 'ready for execution state' may be assigned and transferred to a specific compute node for execution. As tasks are represented as task objects in computer memory and a unique task object identifier, TOID, is assigned to each task, a function may be used to calculate the location (e.g., network address) of the compute node on which the task is supposed to be executed, based on the TOID as function argument. For instance, a hash function may be used to map tasks to compute nodes, thereby distributing the workload uniformly across the different compute nodes. In a variant, tasks in the 'ready for execution' state may be transferred and executed on the compute node (with collocated memory portion of the shared global memory) on which the first piece (e.g. shard or fragment) of the output object is held in the shared global memory. It is also possible to combine static and dynamic tasks distribution mechanisms, e.g. split up a task operating on a large, enumerated dataset into subtasks, each subtask relating to and operating on a different part of the large dataset, execute the different subtasks on different ones of the plurality of compute nodes and from this moment on use the dynamic task distribution mechanism, e.g. task stealing.

In embodiments of the invention, the manager can be implemented either as a software process, which may be hardware supported, or as a hardware unit adapted to run such software process, e.g. comprising or receiving instructions which cause the hardware unit to perform the software process. Furthermore, a manager of a distributed work scheduler may be configured for booting and indefinitely running a scheduling loop (endless loop). The scheduling loop may cycle through the following steps:
∘ accessing the channel and checking for messages from the executor or the manager of another worker;
∘ responding to the messages retrieved from the channel and, if the message is demanding an appropriate action, performing this action (this includes the updating of task dependencies);
∘ checking whether a task residing on the worker has the 'ready for execution' status, e.g. by checking whether tasks are present on the ready queue;
∘ if a task having the 'ready for execution' status is present, accessing the channel to send this task to the executor;
∘ launching a task stealing attempt if none of tasks managed by the manager has the 'ready for execution' status, e.g. if the ready queue is empty, and the task stealing is not suspended.

The channel 212 may be implemented as a message passing channel, which enables and manages the communication process through message exchange between the manager 211 and the executor 213, as well as the message exchange between the managers of different worker instantiations via the inter-channel network 201. In embodiments of the invention, the communication channel may include one or more message queues (in hardware, hardware-supported software or software). The use of a separate communication channel lowers the processing burden on the manager and executor submodules regarding message handling and makes the distributed work scheduler more robust against the temporary failure, unavailability (e.g. going offline), or denial of service of some of its submodules. Task-related or dependency-related messages are not inevitably lost under these circumstances. Moreover, as opposed to some direct communication strategies, the decoupling of the manager submodule from the executor submodule through the channel can prevent stalling. In some embodiments of the invention, the messaging activity through the channel can be monitored, e.g. by tracking the activity or free capacities of the message queues, and the monitoring result can be used to trigger the addition or removal of auxiliary execution hardware units comprised or controlled by the executor. This improves the scalability and flexibility of the distributed work scheduler in response to varying workloads.

The inter-channel network 201 may be a dedicated communication network for interconnecting the different workers 210a-d, which are distributed across the many compute nodes of the distributed computing system. Alternatively, an existing communication network of the distributed computing system, e.g. a private or public network for data exchange between the compute nodes and/or access to the global shared memory, may be used to enable communication between the workers.

In embodiments of the invention, the inter-channel network that interconnects the different worker modules and/or the communication network that interconnects the different compute nodes of the distributed computing network/system may be local network or a wide area network, which uses commonly known network technologies such as Ethernet, FC, and InfiniBand for supercomputers.

The executor 213 comprises hardware for executing the instructions associated with the respective tasks. A task may comprise, e.g. in its body part, pieces or segments of user code in a machine-executable or interpretable form, also called code blocks, that constitute a single unit of computational work and are referred to as the task's instructions. Scheduling tasks for execution in accordance with embodiments of the invention thus includes the step of mapping the task's instructions to an execution hardware unit of one of the executors 213 of the distributed task scheduler 200. Execution hardware owned or controlled by the executor 213 of each worker module 210a-d may comprise one or multiple distinct processors, compute elements or compute cores, e.g. distinct compute cores of a multicore CPU or compute elements of a GPU.

The executor 213 of each worker is configured to receive tasks having the 'ready for execution' status from the messaging channel 212 and execute said tasks on task execution hardware comprised or controlled by the executor 213. It may comprise more than just one execution hardware unit on which the code blocks of the scheduled ready tasks are executed, e.g. multiple redundant execution units for multi-threaded execution. Similarly, it is possible to have multiple executor submodules operatively coupled through the message channel to the manager. In this case, the manager determines which one of the executor submodules currently indicates an 'idle' state and sends a task in the 'ready' state over the message channel to the unoccupied executor submodule. Tasks are always sent dynamically to one of the multiple executor submodules and no static mapping of tasks to executor submodules is used.

Furthermore, the executors of the distributed work scheduler may each be configured for booting and executing a process which continuously loops through the following steps (forming an endless loop):
∘ accessing the channel and checking for incoming messages regarding tasks to be executed;
∘ executing the task associated with an incoming message, by executing its code block(s) on an execution hardware unit comprised or controlled by the executor, and subject to the task's code block containing instructions to generate task-related messages, accessing the channel to send said task-related messages to the manager;
∘ accessing the channel to send a confirmation message to the manager, confirming that the execution of the task's code block(s) has finished on the execution hardware unit.
In the preceding endless loop executed by the executor, the task-related messages may relate to one or more of the following requests:
∘ requesting to create a new task and related task object, e.g. in the event that a running parent task instructs the spawning of a child task;
∘ requesting to place a start dependency on a specific child task that is subject to the prior execution of another child task (sibling);
∘ requesting to place a stop dependency on a specific parent task;
∘ requesting to schedule a created task.

A task creation request may take a fraction of user code, e.g. a part of the parent's code block, and a parameter list (e.g. references to input/output data of objects stored in the globally accessible shared computer memory) as message inputs and expect the return of a unique identifier for the new task. The task creation request is dealt with by the corresponding manager and may be a blocking operation. The latter means that the parent task, during execution, does not progress until the executor receives confirmation from the manager that the requested child task has been created successfully, e.g. confirmation in the form of a new task identifier.

A request for the addition of a start dependency can be expressed in user code and expects the task identifiers of the targeted sibling task and the source sibling task as message inputs. Here, the target sibling task refers to the sibling task whose start dependency count needs to be increased, whereas the source sibling task refers to the sibling task that caused (i.e. is the source) of the start dependency. The target sibling task is subject to the prior execution of the source sibling task and the target sibling task is notified about the completed execution of the source sibling task, in order to have its associated start dependency counter decreased. The manager deals with this request by incrementing the start dependency counter of the dependency data structure that is associated with the target sibling task and includes a reference to the target sibling task in the dependency data structure of the source sibling task for the purpose of notification following execution. Preferably, the code the manager executes to add a start dependency is an atomic operation and cannot be interrupted. No return values are expected for this type of request and sending this request is a non-blocking operation for the executor.

A request for the addition of a stop dependency can be expressed in user code and accepts the task identifiers of a child task and its corresponding parent task as message input. This request is typically triggered after successfully requesting the creation of the child task. The manager deals with this request by incrementing the stop dependency counter of the corresponding parent task and includes a reference to the parent task in the dependency data structure of the child task for the purpose of notification following execution. Preferably, the code the manager executes to add a stop dependency is atomic and cannot be interrupted. No return values are expected for this type of request and sending this request is a non-blocking operation for the executor.

User code may also include statements that cause the executor to issue a request for task scheduling. This request accepts the identifier of the task to be scheduled as input and instructs the manager to place the task object for the previously identified task on the appropriate task queue, viz. the ready task queue if all the start dependencies for the task to be schedules have been resolved and the pending task queue otherwise, and to start tracking its dependencies. No return values are expected for this type of request and sending this request is a non-blocking operation for the executor. Once placed on the appropriate task queue in response to a task scheduling request, the user gives up control on the location and timing of the task's execution; from that moment onwards, the distributed task scheduler is in charge of the dependency management and dynamic workload distribution (task migration).

In general, the executor issues a confirmation message to notify the associated manager when the code block(s) of a scheduled task have finished executing on one of its execution hardware. The task identifier for the task of concern is included in the confirmation message. No return values are expected for this type of request and sending this request is a non-blocking operation for the executor. The confirmation message allows the manager to check unresolved dependencies related to the executed task, e.g. decreasing the stop dependency count of the task that is parent to the finished task, provided the finished task has no outstanding children, and decrease the start dependency count of any sibling task that is subject to the successful completion of the finished task. In response to the confirmation message, the manager may also change its execution state variables from 'running' to 'idle'.

In embodiments of the invention, the distributed work scheduler is preferably initialized in a predetermined order, e.g. in accordance with a bootstrapping method. The boot method may comprise the following steps:
∘ starting a manager thread and executor threads in each worker: the manager thread for executing the scheduling loop of the manager and the executor threads for executing the task code;
∘ initializing scheduling data structures by each manager thread, including the scheduling data structure for the ready task queue (initially empty), the pending task queue (initially empty), the stolen task list (initially empty), the stealing state and counter, the stealing suspended state, the list for storing network addresses of the worker's executor submodules, and the list for storing network addresses of all the remote workers (when indirectly addressing the managers via the worker interfaces) or at least the manager of all the remote workers (when directly addressing the managers);
∘ launching the endless scheduling loops in the workers' manager threads;
∘ launching the executor threads of each worker and communicating the network addresses of the executor threads via message passing to the corresponding manager threads for registration;
∘ communicating the network addresses of each manager thread to all the other workers of the distributed work scheduler (e.g. via broadcasting, or discovery in a p2p network);
∘ launching a user program to be run on one of the workers, e.g. via a loader program, thereby creating the initial task for bootstrapping (user) application execution;
∘ optionally adding more workers on the fly.

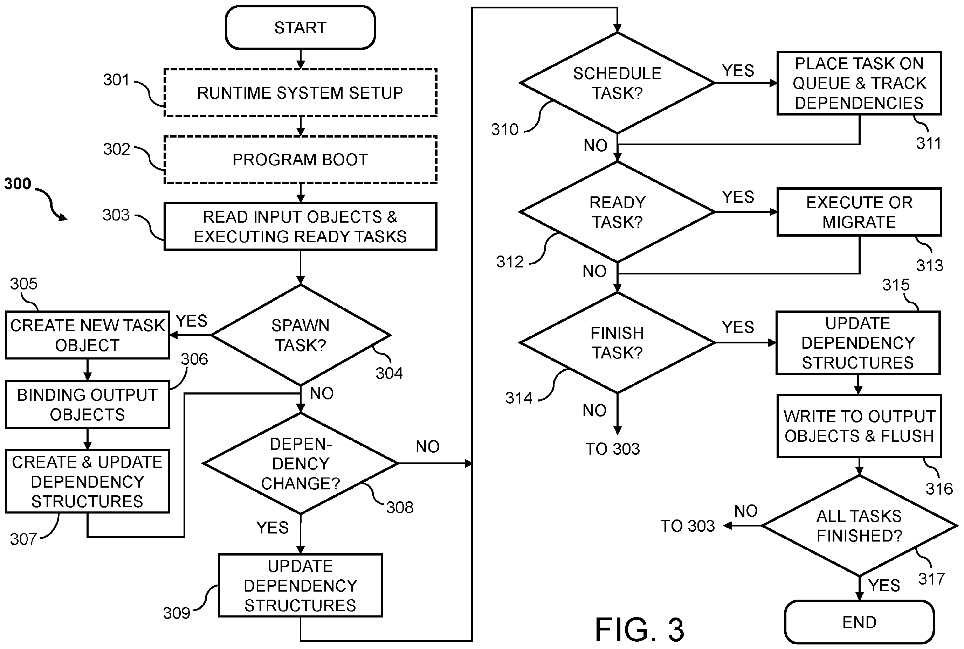

With reference to FIG. 3, the different steps of an execution method for concurrent task-based computer programs are now described for an illustrative embodiment of the invention. In a distributed computing system supporting the instantiation of a distributed worker-based scheduler, the execution method 300 may be preceded by or include a setup step 301 for the distributed work scheduler and a boot step 302. During the setup step 301, the different worker nodes are instantiated or installed on the different compute nodes of the distributed computing system and the distributed work scheduler may be initialized as described previously. This concludes the initial configuration of the distributed work scheduler and the worker nodes, which now form part of the runtime system in which the user program will be run. Adequate runtime systems are not limited to the use of the distributed work scheduler; other runtime environments supporting the execution of the task-based user program may be envisioned by the person skilled in the art. Then, a user program may be launched, e.g. by receiving the program as a message or loading and automatically executing the main or root task associated with the user program. The computer program now enters a decomposition phase 330 which lasts till program termination. Starting with the spawning of new subtasks by the main task, the program's main task is divided into smaller and smaller subtasks as the execution of the program progresses in the decomposition phase, with each newly created subtask having the potential to dynamically create new child tasks. Little by little, the user program is decomposed dynamically into a plurality of tasks, following a task tree structure whose vertices represent tasks that have been created. Tasks are created in a parent-child relationship (corresponding to edges of the task tree) when a currently executing tasks is spawning one or more subtasks or continuation tasks, thereby causing the dynamic growth of the task tree. The full decomposition of the user program and the final task tree structure are only obtained when the user program has finished execution.

The main task or one of the subtasks obtained by division of the main tasks into smaller work units, may issue a task creation request 304 (through spawning), while executing on execution hardware, e.g. compute cores or address generation units, of the distributed computing system in step 303. Hereinafter, a task issuing a request whilst executing is to be understood as the task's code block containing a statement which triggers a component of the runtime system, e.g. the executor submodules of the worker nodes, to issue such request. Included in the task creation request are the statements of the program code to be executed by the spawned task (task body), a reference to each input object (e.g., list of read-only memory objects), and a declaration of each output object. In the runtime system based on the distributed workers, one of the many executor submodules may dispatch the task creation request over the appropriate message channel to its corresponding manager submodule.

In response to the task creation request, the runtime system, e.g. the manager process running on the worker node where the task creation request occurred, checks the declarations of the input and output objects and creates a new task object with unique task object identifier (TOID) in step 305. In embodiments of the invention, input objects are preferably immutable and output objects preferably become immutable upon finished execution of the writing task. Therefore, a new memory object is created for each declared output object of the new task by generation of their unique object identifiers (OIDs). The new memory objects related to the task outputs are then bound to the spawned task in step 306, e.g. by associating the respective OIDs with the new TOID. Moreover, the spawned task is given write access to the output memory objects. For input objects of the new task, the read-only state is asserted. This concludes the instantiation of the spawned task. The TOID of the freshly created task is returned to requestor (i.e., the currently executing task), and the dependency data structure of the requesting task is updated in step 307 to account for the just spawned child task. Moreover, the dependency data structure for the freshly created task is created in step 307, too. A reference to the parent task (e.g. the parent TOID) is included in the dependency data structure for the freshly created task object.

On the individual compute nodes, the RTM alone or the RTM in conjunction with the MOMU may be configured to generate and release unique object identifiers (OID's), including unique (task) object identifiers (TOID's) for task objects and OID's for task input/output objects, upon request. The RTMs may use special memory access routines to modify the granted access rights (e.g. read-only, write/modify), access group and ownership information in the metadata chunk of the respective memory object. Moreover, the RTMs are adapted to store the associations between OIDs and TOIDs throughout the lifetime of the respective tasks. Additionally, the RTMs may be configured to perform garbage collection routines with respect to memory objects that are no longer referenced by any of the active task objects.

Subtasks obtained by division of the main tasks into smaller work units may also issue requests pertaining to a change in the dependency data structure of a task in step 308, while executing on execution hardware of the distributed computing system in step 303. For instance, the previously mentioned 'then' construct may cause the addition of a start dependency on one or more sibling tasks. Included in this request is a list of references to the tasks whose data dependency structures need an update, as well as the kind of dependency (start or stop) to be added. In the runtime system based on the distributed workers, one of the many executor submodules may dispatch the request over the appropriate message channel to its corresponding manager submodule. The runtime system, e.g. the manager process running on the worker node where the request occurred, responds to the request by updating the targeted data dependency structures in accordance with the request in step 309.

Additionally, subtasks obtained by division of the main tasks into smaller work units may issue a task scheduling request 310, while executing on execution hardware of the distributed computing system in step 303. The scheduling request contains the TOID of the task to be released from program control such that it can be managed by the dynamic scheduling process of the runtime system, e.g. the distributed work scheduler. Typically, it is the parent task that makes scheduling calls for its child tasks. The runtime system, e.g. the manager process running on the worker node where the scheduling request occurred, responds to the request by placing the targeted task on the appropriate task queue in step 311. This task queue is usually implemented on the compute node (worker node) on which the task was originally created. Accordingly, task dependencies of the targeted task are now automatically tracked by the runtime system throughout the remaining lifetime of the targeted task. For instance, the targeted task object is wrapped into a pending task object and is placed on the pending queue if not all the start dependencies of the targeted task are resolved yet. Else, if all the start dependencies of the targeted task are resolved at the time of the request, the task object is placed on the ready queue. If the tracking of the dependencies during runtime leads to the resolution of all its start dependencies, then the runtime system moves the task object from the pending queue to the ready queue.

The runtime system, e.g. the manager processes running on the different worker nodes, verifies in step 312 whether there are created tasks available on the respective compute nodes which have the 'ready for execution' status, i.e. no unresolved start dependencies. This verification step may comprise checking for the presence of tasks objects within the ready queue of each worker node. Tasks residing in the ready queue are eligible for execution by execution hardware of the distributed computing system in step 313, either locally (e.g. by the executor of the local worker node) or remotely after task migration (e.g. by the executor of a remote worker node after task distribution).

Furthermore, subtasks obtained by division of the main tasks into smaller work units may trigger the issuing of a task finish message in step 314 upon finishing execution on the execution hardware of the distributed computing system. The scheduling request contains the TOID of the task whose execution has finished. If the finished task has been transferred to another worker node, different from the creator node, the task finish message is sent over the inter-node network to the creator node as the final recipient. The runtime system, e.g. the manager process running on the worker node where the finished task was originally created, then responds to the task finish message by updating the relevant data dependency structures in step 315, e.g. decreasing the stop dependency count of the parent task and, if required, decreasing the start dependency count of the relevant sibling tasks. As a result, some 'pending' tasks may acquire the 'ready for execution' status. If not happened before, the tasks outputs are now written back to the output (memory) objects within the global shared memory in step 316. This writeback step of task outputs to read-only output objects residing inside the shared global (main) memory may comprise the step of writing modified local copies of the relevant output objects back to the shared global memory, i.e. the flushing of output objects. Hence, output data produced by a task can be written to the writable/modifiable local copies of the output objects while that task is being executed, but the modified local copies are flushed as soon as the execution of the task has finished. After flushing, the task outputs are only available and accessible through the corresponding read-only output objects within the shared global memory. This may be achieved by removing the write access privileges to the output objects - more precisely, the local copies thereof - that were previously granted to a task that has now finished. From that moment on, all tasks have exclusively read-only access to these output objects, which may thus act as input objects for future tasks yet to start executing. In step 317, it is verified whether all tasks have been finished, in which case the user program has been executed in its entirety and come to an end. Otherwise, there is at least one other ready task which can be executed to further progress within the user program. It is an advantage of embodiments of the invention that at least one task has the ready for execution status, thus avoiding deadlocks during the parallel and concurrent execution of the user program.

In embodiments of the invention, read-after-write hazards at runtime are prevented because of the tracking and managing of start dependencies placed on continuation tasks (e.g., child tasks) and stop dependencies placed on the writing tasks (e.g., parent tasks). Moreover, output objects are declared and bound to a particular task to be executed, which task has exclusive ownership of the (local copies) of the output objects until the moment the task has finished execution, and the output objects are flushed. A continuation task that has the effect of further manipulating the data of a previously produced output object, e.g. created with respect to a parent or sibling task, has read-only access to the previously produced output object and causes the creation of new output objects for holding the further manipulated data in the shared global memory. This prevents write-after-write and write-after-read hazards.

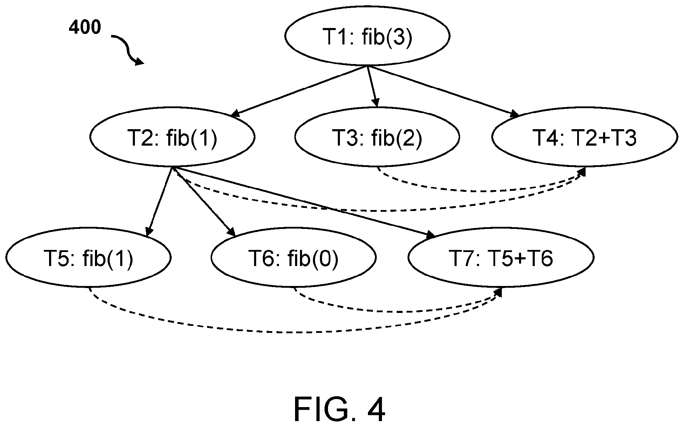

With reference to FIG. 4, an exemplary runtime task tree 400 obtained by dynamically decomposing a computer program for determining Fibonacci numbers into smaller tasks is now described. In the figure, solid arrows represent task spawning actions of a parent task, and dashed arrows represent start dependencies between sibling tasks. Stop dependencies on the child tasks are not shown separately for the parent tasks but would concur with the inverted direction of the solid arrows. The recurrence relation for obtaining the n^{th} number of the Fibonacci sequence can be expressed through the function 'fib' in the following piece of pseudocode: 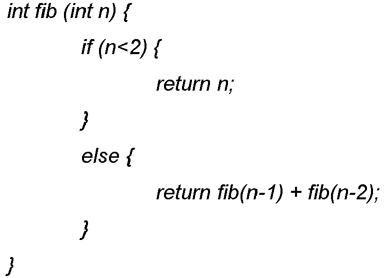 The depicted runtime task tree 400 corresponds to the case n = 3. Calculating the function value fib(3) constitutes the main task 'T1' in this example, which corresponds to the root node of the task tree. The function definition of fib(3) recursively calls fib(2) and fib(1), which can be computed concurrently and asynchronously with respect to the main task `T1'. The function calls fib(2) and fib(1) are said to be concurrent sections of the user program and cause the main task 'T1' to spawn two child tasks 'T2' and 'T3', respectively. Moreover, adding the outcomes of fib(2) and fib(1) constitutes a continuation task 'T4', which is created as a sibling of 'T2' and 'T3', since parent tasks do not suspend and wait for return values in embodiments of the invention. If tasks produce output values in embodiments of the invention, these output values are stored as immutable objects in a globally accessible, shared memory.

As the execution of task 'T4' is not allowed to start before the execution of its two sibling tasks 'T2' and 'T3' has ended, start dependencies with respect to these sibling tasks have been added to task 'T4' to ensure the correct execution order. A start dependency counter for task 'T4' may initially be set to two. When sibling tasks 'T2' and 'T3' complete, the pending task 'T4' is notified, and the respective start dependencies will again be removed from task 'T4'. Accordingly, the start dependency counter for 'T4' may be decreased back to zero. At this point, all the start dependencies of task 'T4' have been resolved and the task 'T4' is ready for execution.

Moreover, stop dependencies with respect to all three child tasks 'T2', 'T3' and 'T4' are added to the main task 'T1'. A stop dependency counter for task `T1' may initially be set to three. The execution of the main task `T1' may end as soon as all its child tasks 'T2', 'T3' and 'T4' are created and all the start and stop dependencies pertaining to these child tasks registered. Nonetheless, the main task 'T1' will not complete until all its child tasks 'T2', 'T3' and 'T4' have been executed and completed in turn. Each time one of the child tasks 'T2', 'T3' and 'T4' completes, the main task `T1' is notified, and the corresponding stop dependency counter is reduced by one count. Eventually, the stop dependency counter for task 'T1' will reach zero, at which point the main task `T1' is allowed to terminate.

In embodiment of the invention, tasks of the task tree that are represented by leaf nodes do not have stop dependencies and are terminated when they have finished executing. In the exemplary task tree of FIG. 4, this applies to all tasks except for 'T1' and 'T2'. Parent tasks cannot be represented by leaf nodes and therefore do not terminate immediately after their execution has finished. Instead, parent tasks `T1' and 'T2' terminate as soon as all their stop dependencies have been resolved. In embodiment of the invention, a child task that terminates triggers the removal of the corresponding stop dependency for its parent task. For instance, the stop dependency with respect to child task 'T5' will be removed for the parent task 'T2' upon termination of the child task 'T5'.

In the exemplary runtime task tree 400, the execution of tasks 'T3' and 'T4' does not require any further recursive function call so that the corresponding tree nodes for these tasks are leaf nodes. For leaf nodes, a stop dependency count remains zero throughout the task's lifetime. In contrast thereto, executing task 'T2' will result in the two function calls fib(1) and fib(0), causing the creation of the respective child task 'T5' and 'T6'. As for the previous task 'T4', the output values for the two functions calls fib(1) and fib(0) need to be summed in a further sibling task, 'T7', which therefore includes start dependencies with respect to tasks 'T5' and 'T6'. Once the three tasks 'T5', 'T6' and 'T7' have been created and their dependencies registered, the execution of the parent task 'T2' may end. Nonetheless, the task 'T2' will not be completed until all its child tasks 'T5', 'T6' and 'T7' have been executed and completed in turn, e.g. not until its associated stop dependency counter will reach zero. In the example, the tasks 'T5', 'T6' and 'T7' do not invoke any further functions so that the tree nodes corresponding to these tasks are leaf nodes. The final result, i.e. the value of fib(3), can be retrieved from the immutable object in the globally shared memory that holds the output value of task 'T4'.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. A method (300) of executing a concurrent task-oriented computer program on a distributed computing system (100) comprising a plurality of compute nodes (110a-d) coupled to a shared global computer memory (120), the method comprising the steps of:
- decomposing the task-oriented computer program into a plurality of tasks at runtime, by dynamically creating tasks (305) on the plurality of compute nodes in accordance with a tree structure, referred to as task tree;
- constraining an execution order of the previously created tasks by adding dependencies (307) to the previously created tasks, including adding stop dependencies to parent tasks of the task tree upon creation of their respective child tasks and adding start dependencies to sibling tasks of the task tree that are subject to the prior execution of at least one other sibling task;
- distributing (313) the created tasks having all the start dependencies resolved across the different compute nodes and then executing (303) the previously distributed tasks locally on execution units of the different compute nodes;
- terminating the created tasks that have finished execution on the execution units of the different compute nodes and no stop dependencies outstanding;
- storing task outputs (316) as immutable objects in the shared global computer memory when the respective task has finished executing, a unique object identifier being assigned to each object to be stored in the shared global computer memory;
- retrieving task inputs (303) from immutable objects stored in the shared global computer memory by reference to the corresponding object identifier,
wherein dynamically creating tasks on the plurality of compute nodes in accordance with a tree structure comprises:
- creating one or multiple other tasks in a parent-child relationship while executing at least one of the previously distributed tasks, said creating of the one or multiple other tasks being a non-blocking operation.

2. The method of claim 1, further comprising the steps of:
- for a task to be executed and requiring writing of task outputs to the shared global computer memory, referred to as the writing task, declaring objects in the shared global computer memory to which the task outputs are to be written and returning the corresponding object identifiers;
- granting a transitory write permission to the writing task, thus allowing the writing task to modify the previously declared objects in the shared global computer memory while being executed;
- revoking the transitory write permission upon finishing execution of the writing task and setting access permissions with respect to the previously declared and modified objects in the shared global computer memory to read-only.

3. The method (300) of claim 2, further comprising the steps of:
- creating initial local versions of the previously declared objects to be modified by the writing task on the compute node on which the writing task is being executed;
- modifying the local versions of the previously declared objects during execution of the writing task;
- flushing the local versions of the previously declared objects to the shared global computer memory when the writing task has finished executing.

4. The method (300) of any one of the preceding claims, wherein executing (303) the previously distributed tasks comprises executing code segments included in at least one of the previously distributed tasks which cause the spawning (304) of one or multiple child tasks, thereby dynamically creating (305) one or multiple other tasks in a parent-child relationship.

5. The method (300) of any one of the preceding claims, further comprising the step of launching the computer program (302) by creating and executing a root task on of the different compute nodes, said root task corresponding to a root vertex of the task tree.

6. The method (300) of any one of the preceding claims, further comprising the step of tracking (311) the start and stop dependencies of each non-terminated task.

7. The method (300) of any one of the preceding claims, further comprising the steps of:
- removing stop dependencies (315) from parent tasks of the task tree upon finishing the execution of their respective child tasks;
- removing start dependencies (315) from sibling tasks being subject to other sibling tasks upon finishing the execution of the said other sibling tasks.

8. The method (300) of any one of the preceding claims, wherein the step of distributing the tasks further comprises:
- scheduling (311) the tasks having all the start dependencies resolved for execution on respective target nodes of the different compute nodes, said target nodes being determined according to a task scheduling strategy, preferably a work stealing strategy;
- migrating (313) scheduled tasks to the respective target nodes.

9. The method (300) of any one of the preceding claims, wherein the shared global computer memory (120) is a distributed computer memory and/or comprises a plurality of physically separated memory modules (121; 122; 123; 124).

10. The method (300) of claim 9, the shared global computer memory being configured as a distributed hash table and each object in the shared global computer memory (120) being composed of a plurality of object fragments, each object fragment in the shared global computer memory corresponding to a stored value in the distributed hash table and a physical memory address of the object fragment corresponding to an input key for querying the distributed hash table, and a fragment index indicating a location of each object fragment within the corresponding object, the method further comprising the step of:
- calculating the physical memory address of an object fragment to be accessed in the shared global computer memory, the physical address being a function of the fragment index and the object identifier associated with the object fragment.

11. A distributed computer (100) or computing system comprising a plurality of compute nodes (110a-d) coupled to a shared global computer memory (120) and adapted to carry out the method steps of any one of the preceding claims.

12. A computer program comprising instructions which, when the program is executed on a distributed computer or computing system comprising a plurality of compute nodes coupled to a shared global computer memory, cause the distributed computer or computing system to carry out the method steps of any one of the claims 1 to 10.
